# FASCICULE DE BREVET EUROPEEN

(11) **EP 4 437 362 B1**
(45) Date de publication et mention de la délivrance du brevet: **15.10.2025**
(21) Numéro de dépôt: 22826153.3
(22) Date de dépôt: 23.11.2022
(51) Int. Cl.: G01S 7/4863, G01S 13/44, F41G 7/22, G01S 3/786, G01S 3/784, G01S 17/66

(54) **PROCÉDÉ DE LOCALISATION D'UNE CIBLE AU MOYEN D'UN DÉTECTEUR À PLUSIEURS QUADRANTS**
VERFAHREN ZUR ORTUNG EINES ZIELS MITTELS EINES DETEKTORS MIT MEHREREN QUADRANTEN
METHOD FOR LOCATING A TARGET BY MEANS OF A DETECTOR HAVING A PLURALITY OF QUADRANTS

(30) Priorité: 23.11.2021 FR 2112328
(43) Date de publication de la demande: 02.10.2024
(73) Titulaire: Safran Electronics & Defense, 75015 Paris (FR)
(72) Inventeur: JUNIQUE, Pascal, 77550 MOISSY CRAMAYEL (FR); OUDYI, Farid, 77550 MOISSY-CRAMAYEL (FR); SAND, Marion, 77550 MOISSY-CRAMAYEL (FR)
(74) Mandataire: Regimbeau
(86) Numéro de dépôt international: PCT/FR2022/052165
(87) Numéro de publication internationale: WO 2023/094770

(56) Documents cités:
- US-A1- 2011 073 704
- US-A1- 2013 070 239
- XUE YANG ET AL: "Quadrant uniformity calibration method for four quadrant photodetectors", SPIE PROCEEDINGS; [PROCEEDINGS OF SPIE ISSN 0277-786X], SPIE, US, vol. 11023, 12 March 2019 (2019-03-12), pages 1102304 - 1102304, XP060116290, ISBN: 978-1-5106-3673-6, DOI: 10.1117/12.2516342
- ZHANG JUN ET AL: "Quadrant response model and error analysis of four-quadrant detectors related to the non-uniform spot and blind area", APPLIED OPTICS, vol. 57, no. 24, 20 August 2018 (2018-08-20), US, pages 6898, XP055954149, ISSN: 1559-128X, DOI: 10.1364/AO.57.006898

## Description

### DOMAINE TECHNIQUE

L'invention concerne le domaine de la détection d'une cible au moyen d'un détecteur à plusieurs quadrants, la cible étant de préférence éclairée. L'invention trouve notamment application dans le domaine du guidage semi-actif laser d'un objet vers la cible pour le guidage automatique d'armements air/surface ou surface/surface.

### ETAT DE LA TECHNIQUE

Un dispositif de localisation d'une cible comprenant un photodétecteur à quatre quadrants exploite un flux diffusé par la cible à détecter pour mesurer la direction de la cible dans son repère de visée. Une telle localisation permet notamment de poursuivre une cible en mouvement telle un avion, engin, missile, véhicule, char etc. Un tel dispositif peut être monté sur un système de guidage par exemple un missile autoguidé, ou sur un poste de tir permettant de poursuivre une balise portée par le missile et une cible.

L'écart entre l'axe de visée et la direction de la cible est l'écartométrie ou écart angulaire ou encore dépointage angulaire. Cette écartométrie est usuellement dans le cas du guidage soit ramenée à zéro soit conservée constante pour que le système de guidage comprenant le dispositif de localisation soit correctement guidé vers la cible.

La cible peut naturellement émettre de la lumière. Toutefois, dans le cadre d'un guidage semi-actif laser, un faisceau laser de forte puissance et à faible divergence émis par un désignateur marque la cible et le flux laser diffusé (rétrodiffusé) par la cible est alors exploité pour mesurer l'écartométrie. Le désignateur est par exemple intégré dans le viseur ou bien encore porté par un dispositif tiers et coopératif.

On connait notamment deux catégories de systèmes de guidage ou capteurs qui exploitent un tel flux laser diffusé par la cible à localiser.

Les localisateurs Laser, ou LST, de l'anglais, Laser-Spot-Tracker, sont des équipements intégrés dans un viseur dont la fonction est d'assurer que le faisceau laser émis par le désignateur est bien positionné sur la cible. Un LST est plus précisément un écartomètre qui détermine la direction angulaire du flux laser diffusé par la cible et cette direction est comparée à la direction de la cible observée dans un imageur harmonisé avec le LST.

Les autodirecteurs ou Ecartomètres Semi-Actifs Lasers, désignés par le terme E-SAL, sont intégrés dans les armements et leur apportent la capacité à se guider avec précision sur le spot laser positionné sur la cible, qui peut être fixe, déplaçable ou mobile. Le document US2011073704A1 divulgue un autodirecteur ou écartomètre de ce type.

Les principales fonctions de ces systèmes sont les suivantes :
- la détection d'un flux laser réfléchi par la cible pointée et associé au laser de désignation ;
- la poursuite de cette cible à partir de la réflexion du flux laser maintenu positionné sur celle-ci ;
- la fourniture d'une écartométrie de la cible dans le repère du capteur LST ou du capteur E-SAL.

Pour la localisation et le guidage, une solution usuelle consiste à utiliser un photodétecteur multi-quadrants, notamment un photodétecteur de type 4-quadrants, dont la surface photo-détectrice est en en forme de disque ou de carré coupé en quatre surfaces de photodétection égales et indépendantes. Ce photodétecteur est associé à une optique collectrice de flux permettant une répartition d'énergie plus ou moins localisée, typiquement un disque homothétique de l'éclairement dans la pupille d'entrée de l'optique, sur la surface active du photodétecteur. La position de cette répartition d'énergie dépend de la direction angulaire de provenance du flux incident.

Les niveaux d'énergie collectés par chacun des quadrants varient donc selon cette direction et c'est ce qui permet de déterminer l'écartométrie.

Prenons en exemple un photodétecteur quatre-quadrants. Pour déterminer l'écartométrie, les opérations à effectuer avec un détecteur 4-quadrants consistent en deux comparaisons des signaux reçus sur les secteurs appairés : d'une part somme des 2 quadrants en haut vs somme des 2 quadrants en bas et d'autre part somme des 2 quadrants à gauche vs somme des 2 quadrants à droite. On effectue donc deux pesées du signal détecté selon les axes vertical et horizontal. Puis une tabulation préalablement réalisée en usine est appliquée et donne les positions angulaires vraies en site et gisement de la tache par rapport au référentiel du détecteur, en correspondance avec les valeurs de pesées haut-bas et gauche-droite.

Cette étape de conversion entre pesées et écartométrie suppose que la répartition de l'énergie sur le détecteur 4 quadrants est identique dans le moyen mis en oeuvre en usine et dans le contexte d'utilisation.

Or ce n'est pas toujours le cas.

La précision d'écartométrie est parfois dégradée, notamment en présence de phénomènes de turbulences atmosphériques ou de forte luminosité.

En effet, les signaux laser générés par les quatre quadrants du photodétecteur, correspondant à l'éclairement du capteur provenant de la désignation de la cible, sont susceptibles d'être perturbés :
a) des sources parasites émettent un flux photonique partiellement inclus dans la bande spectrale du filtre optique du capteur et avec une modulation qui n'est pas totalement rejetée par le filtrage électronique adapté à la modulation temporelle du laser de désignation ; ces stimuli s'ajoutent au signal laser et peuvent potentiellement modifier la réponse du système vis à vis du signal utile laser ;
b) l'environnement de la scène influence la propagation du front d'onde du laser du désignateur vers la cible puis de la cible vers le capteur ; les turbulences présentes sur ces trajets génèrent des effets de type scintillation qui se traduisent par des modulations d'éclairement à l'intérieur de la pupille optique du capteur.

Les perturbations de type a) résultent de la problématique décrite ci-dessous.

Les chaînes électroniques, analogiques et numériques, ont pour fonctions de filtrer le signal capté par chaque voie ou quadrant du photodétecteur à 4-quadrants, pour les besoins de détection et reconnaissance du codage temporel ; et d'élaborer les informations nécessaires à mesurer les 4 portions d'énergie des impulsions laser, pour les besoins de localisation de la cible. Les éléments des chaînes électroniques doivent permettre de garantir une bonne restitution des écartométries laser y compris dans les cas de multi-échos avec 2 impulsions temporellement proches.

Ces exigences imposent un compromis, lors de la conception, entre la sensibilité du capteur, sa dynamique instantanée de mesure, l'efficacité du filtrage des parasites et la fidélité dans la restitution des 4 informations énergétiques donc dans la précision écartométrique.

Une distorsion ou saturation de l'un des 4 signaux utiles peut occasionnellement se produire en présence de modulations parasites intenses.

Les signaux issus des quatre quadrants et exploités pour effectuer les calculs des deux pesées, se retrouvent alors biaisés par l'amputation du signal laser sur le(s) quadrant(s) distordu(s) ou saturé(s).

Concernant les perturbations de type b), la problématique est la suivante.

Les variations d'indice optique de l'air sur le trajet du laser se traduisent par un éclairement inhomogène sur la pupille optique du capteur, et ces inhomogénéités sont variables d'une réception d'impulsion laser à la suivante.
Cette non-uniformité, variable temporellement, se répercute par des modulations dans la répartition de l'énergie sur le photodétecteur et perturbent les 2 pesées.

Pour de faibles perturbations, le bruit d'écartométrie est aggravé, mais sans mettre en péril la réussite de la mission.

Pour de fortes perturbations, la dispersion des mesures d'écartométrie délivrées met en échec la localisation et le guidage.

### EXPOSE DE L'INVENTION

L'invention propose de pallier au moins un de ces inconvénients et propose notamment de diagnostiquer les deux types de fonctionnement dégradé : (a) saturation de chaîne électronique en présence de forte modulation de fond et (b) inhomogénéité d'éclairement de la pupille en présence de turbulences.

A cet effet, l'invention concerne un procédé de localisation d'une cible au moyen d'un dispositif de détection comprenant un photodétecteur comprenant NxM quadrants positionné par rapport à un axe de visée du dispositif de détection, le photodétecteur étant configuré pour détecter des signaux optiques issus de la cible à détecter, ledit procédé étant mis en oeuvre dans une unité de traitement dudit dispositif et comprend les étapes suivantes, la cible diffusant un signal optique :
- acquisition des signaux détectés par chaque quadrant correspondant aux signaux diffusés par la cible vers les quadrants ;
- traitement des signaux acquis pour déterminer une écartométrie en site et une écartométrie en gisement de la direction de la cible par rapport à l'axe de visée du dispositif ;
- traitement des signaux acquis pour en déduire des indicateurs de répartition des signaux détectés par les quadrants ;
- traitement des écartométries en site et gisement déterminées pour en déduire des indicateurs de la répartition théorique des signaux dans les quadrants pour ces écartométries ; les indicateurs de répartition du signal dans les quadrants étant obtenus au moyen des valeurs de pesées théoriques et mesurées, les dites pesées étant fonction des niveaux de signal détectés par les quadrants.
- vérification de la cohérence des indicateurs de la répartition théorique aux indicateurs de la répartition issue des signaux acquis de manière à déterminer si l'écartométrie mesurée est valide.

L'invention est avantageusement complétée par les caractéristiques suivantes, prises seules ou en une quelconque de leur combinaison techniquement possible :
- les indicateurs de la répartition théorique des signaux dans les quadrants est obtenue par interpolation, de préférence bilinéaire, des écartométries avec une cartographie des indicateurs de la répartition théorique des signaux en fonction de plusieurs écartométries théoriques ;
- le photodétecteur comprend des quadrants répartis selon deux axes perpendiculaires dits axes site Z et gisement Y, les indicateurs de répartition du signal dans les quadrants étant obtenue au moyen des valeurs de pesées théoriques et mesurées, lesdites pesées étant fonction des niveaux de signal détectés par des quadrant ;
- les NxM quadrants du photodétecteur étant répartis selon deux axes perpendiculaires entre eux, dit axe site Z et axe gisement Y, les quadrants détectant un signal définissant une sous-matrice incluse dans la matrice NxM, de taille NixMi quadrants avec Ni inférieur ou égal à N, et Mi inférieur ou égal à M, et détectant des signaux, les indicateurs de répartition des signaux étant obtenus en comparant les signaux détectés sur des quadrants adjacents pris selon les lignes de la matrice NixMi d'une part et pris selon les colonnes de la matrice NixMi d'autre part ;
- la vérification de la cohérence consiste à calculer un critère de comparaison entre une première métrique fonction des indicateurs de répartition théorique et une deuxième métrique fonction des indicateurs de répartition des signaux acquis, le critère étant comparé à un seuil pour valider les mesures d'écartométrie ;
- le critère de comparaison est défini par une différence non signée entre les première et deuxième métriques, l'écartométrie étant valide si ce critère est inférieur à un seuil et invalide si ce critère est supérieur ou égal audit seuil ;
- le seuil est ajusté en fonction du rapport signal à bruit mesuré sur chaque quadrant et/ou de l'écartométrie déterminée ;
- le photodétecteur comprend quatre quadrants A, B, C, D, les quadrants A et B étant au-dessus de l'axe site Z, les quadrants C et D étant au-dessous l'axe Z, le quadrant C étant au-dessous du quadrant A, le quadrant D étant au-dessous du quadrant B, les critères de répartition des signaux sur les quadrants étant définis de la manière suivante :
   - Y₁=(B-A)/( A+B), pesée comparant les deux signaux du haut ;
   - Y₂=(D-C)/(C+D), pesée comparant les deux signaux du bas
   - Y=(B+D-A-C)/(A+B+C+D) pesée comparant les signaux de part et d'autre de l'axe vertical ;
   - Z₁=(A-C)/(A+C), pesée comparant les deux signaux de de gauche
   - Z₂=(B-D)/(B+D), pesée comparant les deux signaux de droite
   - Z=(A+B-C-D)/(A+B+C+D) pesée comparant les signaux de part et d'autre de l'axe horizontal.
- les métriques fonction des critères de répartition théoriques ou mesurées est définie par max([abs(Y₁-Y₂) ; abs(Z₁-Z₂) ; abs(Y₁-Y) ; abs(Z₁-Z) ; abs(Y₂-Y), abs(Z₂-Z)]) avec max la valeur maximale et abs la valeur absolue.

L'invention concerne également un dispositif de détection d'une cible comprenant un photodétecteur à plusieurs quadrants et une unité de traitement configurée pour mettre en œuvre un procédé selon l'invention.

L'invention concerne également un système de guidage d'un missile vers une cible en mouvement, ledit système comportant un dispositif de détection selon l'invention.

L'invention concerne également un produit programme d'ordinateur comprenant des instructions de code pour la mise en oeuvre d'un procédé selon l'invention, lorsque celui-ci est exécuté par l'unité de traitement du dispositif de détection selon l'invention.

Ainsi, l'invention permet une comparaison entre les signaux mesurés issus des quadrants du photodétecteur et des niveaux qui respectent la répartition énergétique théorique afin de valider les mesures d'écartométrie.

L'invention permet d'identifier des mesures d'écartométrie erronées provoquées par un fonctionnement dégradé.

L'invention permet d'augmenter la fiabilité de la fonction écartométrique par l'ajout d'un critère sur les géométries et radiométrie de la tache sur le photodétecteur.

Grâce à l'invention, une analyse de la cohérence des signaux vis-à-vis de la répartition théorique (typiquement un disque) permet de déterminer que l'uniformité de l'éclairement dans la pupille optique est significativement dégradée suite à des phénomènes de scintillation sur les trajets du laser du désignateur à la cible et/ou de la cible au capteur ou encore à la dégradation à cause de la chaine électronique comme indiqué plus haut.

Sachant ainsi identifier un fonctionnement dégradé, il est possible de mettre en œuvre des mesures correctives :
- invalider les écartométries aberrantes ;
- filtrer temporellement les écartométries bruitées avant leur exploitation par la tourelle de poursuite du système de désignation (cas du capteur LST) ou par la chaîne de guidage de l'armement (cas du capteur E-SAL) ;
- mettre en place au besoin un dispositif réducteur des effets de la scintillation; étant pénalisant pour la transmission optique et donc la sensibilité, il n'est pas souhaitable d'avoir en permanence un tel dispositif réducteur dans la voie optique ;
- mettre en œuvre au besoin un réglage des chaînes électroniques de détection plus robuste vis-à-vis des modulations sous forte luminosité ; étant pénalisant pour la sensibilité, il n'est pas souhaitable d'avoir à appliquer ce réglage de manière systématique.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 illustre un dispositif de localisation d'une cible selon un mode de réalisation de l'invention ;
- la figure 2 illustre schématiquement un photodétecteur 4-quadrants ;
- les figures 3a et 3b illustrent des configurations de détection par un photodétecteur 4-quadrants ;
- la figure 4 illustre une configuration de détection dégradée au moyen d'un détecteur 4-quadrants ;
- la figure 5 illustre un photodétecteur à seize quadrants arrangés en matrice ;
- la figure 6 illustre des étapes d'un procédé de localisation d'une cible selon un mode de réalisation de l'invention ;
- la figure 7 illustre un mode de sélection d'une configuration de ce détecteur en une matrice 4x4-quadrants pour une mesure d'écartométrie correspondante ;
- la figure 8 illustre plusieurs possibilités de sélection de configuration à 2x2 quadrants pour une mesure d'écartométrie correspondante de la figure 6 ;
- la figure 9 illustre un autre exemple de répartition d'une tache sur un détecteur à 4x4-quadrants ;
- la figure 10 illustre plusieurs possibilités de sélection d'une matrice à plus de 4 quadrants pour une mesure d'écartométrie correspondante de la figure 9 ; et
- les figures 11a et 11b illustrent différents arrangements de quadrants auxquels peuvent s'appliquer l'invention.

Sur l'ensemble des figures les éléments similaires portent des références identiques.

### DESCRIPTION DETAILLEE

### Dispositif de localisation

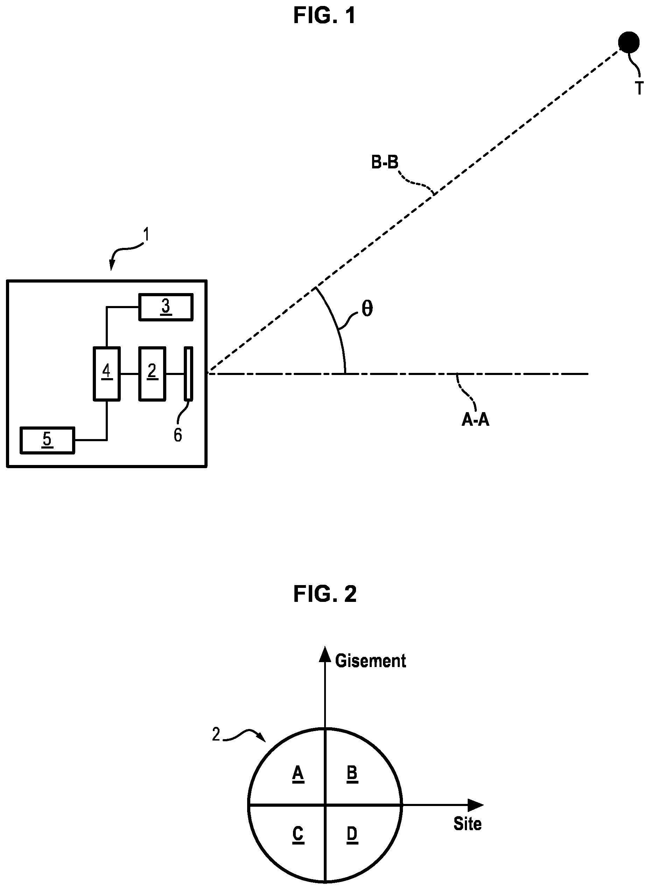

La **figure 1** illustre un dispositif 1 de localisation d'une cible T comprenant un photodétecteur 2 à plusieurs quadrants et plus précisément à NxM quadrants avec N et M supérieur ou égal à deux.

Ce photodétecteur 2 plan est derrière une optique 6 par laquelle passe des rayons lumineux issus de la cible T à localiser. Une telle optique 6 est par exemple une lentille convergente. De manière complémentaire, le dispositif de localisation comprend une unité d'émission 3 d'un faisceau, connu sous le terme désignateur, permettant d'éclairer la cible T. Dans le cas d'un guidage semi-actif laser, le faisceau émis est un faisceau laser. Dans un autre exemple, le faisceau est émis par un émetteur d'une balise portée par une munition téléguidée, de type émetteur à LED ou tout autre émetteur photonique associé à une modulation temporelle.

Dans ce qui suit on se place dans le cas où la cible renvoie un flux optique issu de l'éclairage par le désignateur 3.

Le dispositif 1 de localisation et le photodétecteur 2 sont positionnés par rapport à un axe de visée AA qui forme avec la direction BB de la cible T une écartométrie *θ*. Cette écartométrie *θ* est mesurée au moyen de la répartition des signaux optiques, c'est-à-dire le flux optique rétrodiffusé par la cible, sur les quadrants du photodétecteur 2.

La **figure 2** illustre un photodétecteur à quatre quadrants, notés A, B, C, D. Dans cet exemple, les quadrants sont en forme de secteur angulaire d'une couronne concentrique, arrangés en une matrice NxM=2x2 quadrants.

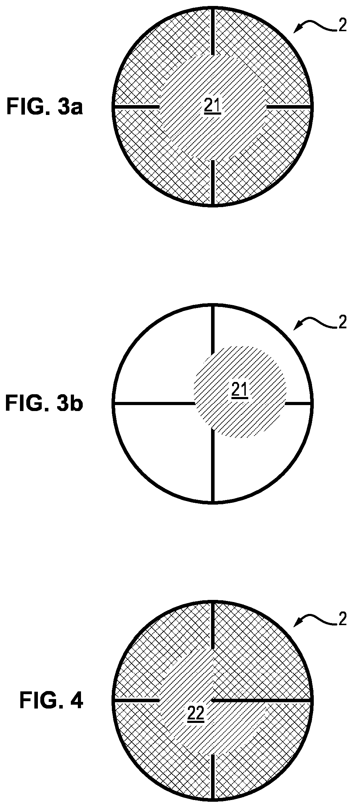

En fonctionnement, le photodétecteur 2 étant centré sur l'axe de visée AA, les signaux optiques détectés par le photodétecteur 2 forment une tache 21 centrée comme illustré sur la **figure 3a** lorsque l'axe de visée AA est aligné sur la direction de la cible ; elle est non centrée sinon comme illustré sur la **figure 3b****.** Le centre de la tache constitue les coordonnées de l'écartométrie *θ* en site et en gisement et correspond au barycentre énergétique de la tache défini à partir des pesées selon les axes de site et de gisement. Chaque pesée est fonction des niveaux de signaux détectés par chaque quadrant.

Le photodétecteur 2 est configuré pour détecter des signaux optiques diffusés par la cible. Il est relié à une unité 4 de traitement qui permet notamment de mesurer l'écartométrie et de valider cette mesure selon un procédé qui sera décrit ci-après.

L'unité 4 de traitement comprend une chaine électronique (non décrite ni détaillée car bien connue de l'homme du métier) reliée à chaque quadrant du photodétecteur 2 pour acquérir les signaux électroniques correspondant au flux optique détecté par chaque quadrant et intégré par la surface de photo détection du quadrant.

Comme indiqué en introduction l'écartométrie peut être faussée lorsque le photodétecteur fonctionne en mode dégradé. La **figure 4** illustre un cas de fonctionnement dégradé, correspondant à l'exemple d'illumination de la figure 3a : sur la figure 3a la répartition énergétique dans les quadrants est nominale : la tache est bien présente intégralement et ici les niveaux des signaux mesurés sur chaque quadrant sont égaux. Sur la figure 4, pour la même écartométrie la répartition énergétique de la tache 22 dans les quadrants est incohérente : le niveau du signal mesuré sur le quadrant B est nul suite à un dysfonctionnement du quadrant B par exemple dans le cas d'une saturation de la chaine électronique du quadrant B. Il existe une incohérence entre la répartition des signaux dans les quadrants avec la répartition théorique associée à une écartométrie telle que calculée à partir des signaux acquis dans le cas de la figure 4.

C'est sur le constat de cette incohérence que le procédé de l'invention est basé, procédé mis en oeuvre dans l'unité 4 de traitement du dispositif ci-dessus décrit.

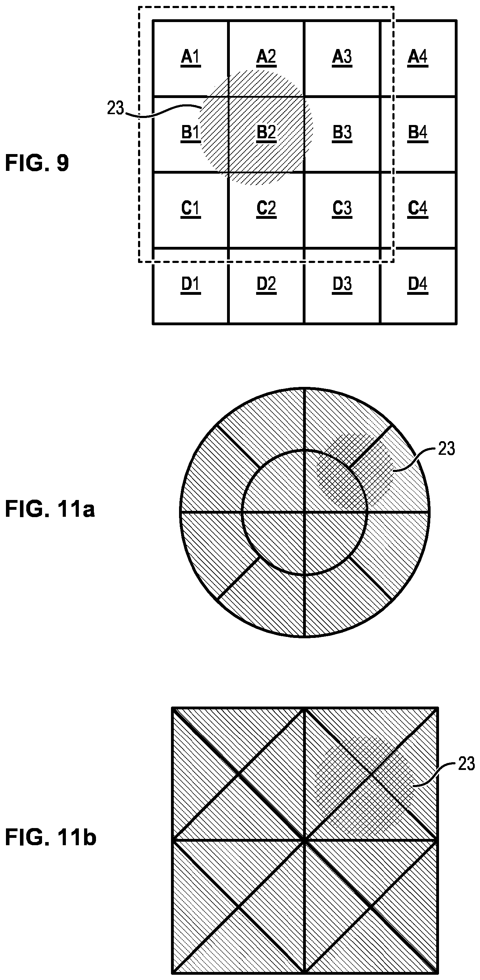

Un tel principe s'applique à un photodétecteur 2 quelconque comprenant plusieurs quadrants, arrangés en une matrice de taille NxM quadrants, NxM supérieur ou égal à quatre. On montre ici des exemples de quadrants classiquement arrangés en matrice mais cet arrangement peut être quelconque, comme illustré à titre d'exemple sur les **figures 11a** et **11b****.** De tels arrangements autres qu'une classique matrice peuvent permettre de minimiser le nombre de voies de traitement pour couvrir un champ de vue. C'est par exemple le cas d'un arrangement de 4x3 de quadrants correspondant à des secteurs d'une couronne concentrique comme illustré sur la figure 11a.

D'autres arrangements peuvent avantageusement présenter une géométrie qui facilite la connexion des signaux de sortie en ayant pour chaque quadrant une proximité avec la périphérie. Ce serait par exemple le cas de l'arrangement de 4x4 quadrants constitués de triangles illustrés sur la figure 11b. Sur les figures 11a et 11b la tache 23 détectée est représentée par un disque.

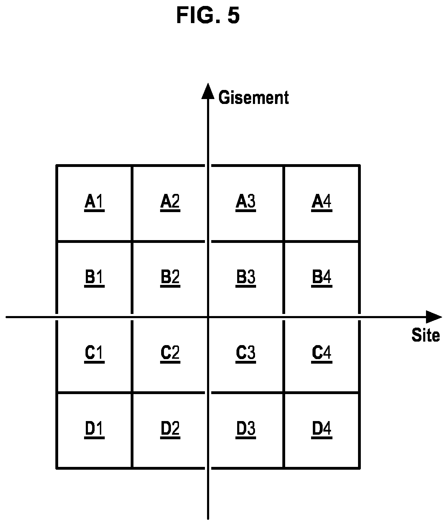

La **figure 5** illustre un exemple d'un photodétecteur 2 comprenant une matrice de NxM=4x4 quadrants A₁, A₂, A₃, A₄, B₁, B₂, B₃, B₄, C₁, C₂, C₃, C₄, D₁, D₂, D₃, D₄. Chaque quadrant est configuré pour détecter des signaux optiques comme expliqué précédemment.

### Procédé

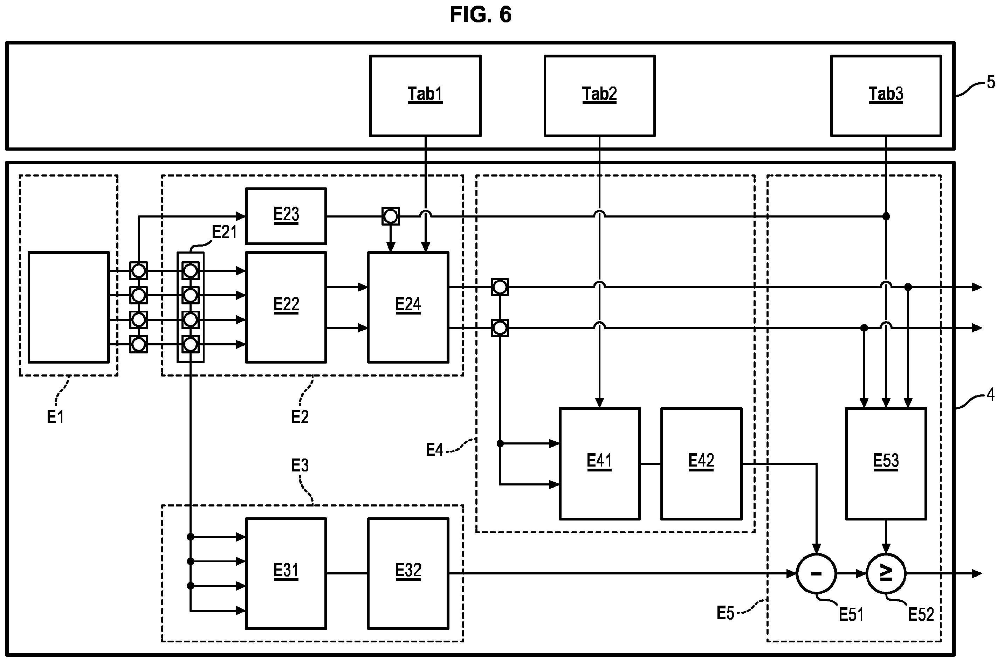

Dans le cadre d'un procédé de localisation décrit en relation avec la **figure 6** des signaux électroniques correspondant aux signaux optiques diffusées par la cible et détectés par le photodétecteur 2 sont acquis (étape E1). On se place dans le cas où la cible est éclairée par un désignateur 3.

Les signaux acquis correspondent aux signaux optiques diffusés par la cible T à localiser et détectés par le photodétecteur 2. Un signal par quadrant est acquis.

Ces signaux sont ensuite traités pour déterminer une écartométrie en site et en gisement, notées respectivement S(t) et G(t) (étape E2). Cette écartométrie est directement liée à la position de la tache sur le photodétecteur. En particulier, l'écartométrie est obtenue à partir d'un calcul de pesées qui correspond à des comparaisons de niveaux de signaux dans différents quadrants.

L'écartométrie mesurée est obtenue à partir des signaux détectés par chaque quadrant, comme plus amplement détaillé par la suite.

Ensuite, l'écartométrie mesurée (étape E2) est traitée (étape E4) pour déduire des indicateurs de la répartition énergétique théorique correspondante des signaux optiques, autrement dit de la tache lumineuse, dans les quadrants. Ces indicateurs sont simplement désignés par indicateurs théoriques.

En parallèle, les signaux acquis sont traités (étape E3) pour calculer des indicateurs de la répartition énergétique correspondante des signaux optiques détectés par les quadrants. Ces indicateurs sont simplement désignés par indicateurs mesurés.

On dispose donc d'une part d'indicateurs de la répartition théorique et d'autre part d'indicateurs de la répartition mesurée.

Ces indicateurs théoriques et mesurés sont ensuite comparés (étape E5) pour vérifier leur cohérence et valider ou non l'écartométrie mesurée.

### Détermination de l'écartométrie en site S(t) et en gisement G(t) à partir des signaux acquis (étape E2)

La détermination de l'écartométrie en site S(t) et en gisement G(t) comprend un calcul (étape E22) des pesées selon ces directions. Ces pesées exploitent les niveaux de signal détectés dans chaque quadrant et comparent les signaux de part et d'autre des lignes et colonnes de la matrice de quadrants dans les directions selon les axes site S(t) et gisement G(t). Autrement dit, les pesées comparent les niveaux des signaux de plusieurs quadrants.

Selon un mode de réalisation, on considère un détecteur à quatre quadrants comme sur la figure 2. On a donc une matrice de 2x2 quadrants.

L'écartométrie est obtenue à partir des pesées en site et en gisement. Dans le cas d'une matrice de 2x2 quadrants, la pesée en site est obtenue en comparant deux à deux les niveaux de signaux détectés par chaque quadrant selon les axes de site et de gisement. En particulier, la pesée en site est donnée par P_{Y}=(S_{B}+S_{D}-S_{A}-S_{C})/(S_{A}+S_{B}+S_{C}+S_{D}) : elle compare les signaux de part et d'autre de l'axe gisement (vertical) et la pesée en gisement est donnée par P_{Z}=(S_{A}+S_{B}-S_{C}-S_{D})/(S_{A}+S_{B}+S_{C}+S_{D}) : elle compare les signaux de part d'autre de l'axe site (horizontal).

Selon un mode de réalisation, dans le cas d'un photodétecteur NxM quadrants avec NxM supérieur à quatre comme sur la figure 5, on considère des sous-ensembles de 2x2 quadrants pour simplifier les calculs. Les pesées en site et en gisement sont considérées en comparant deux à deux chaque quadrant autour de chaque ligne et colonne de la matrice du sous-ensemble de 2x2 quadrants selon des directions parallèles aux axes site et gisement.

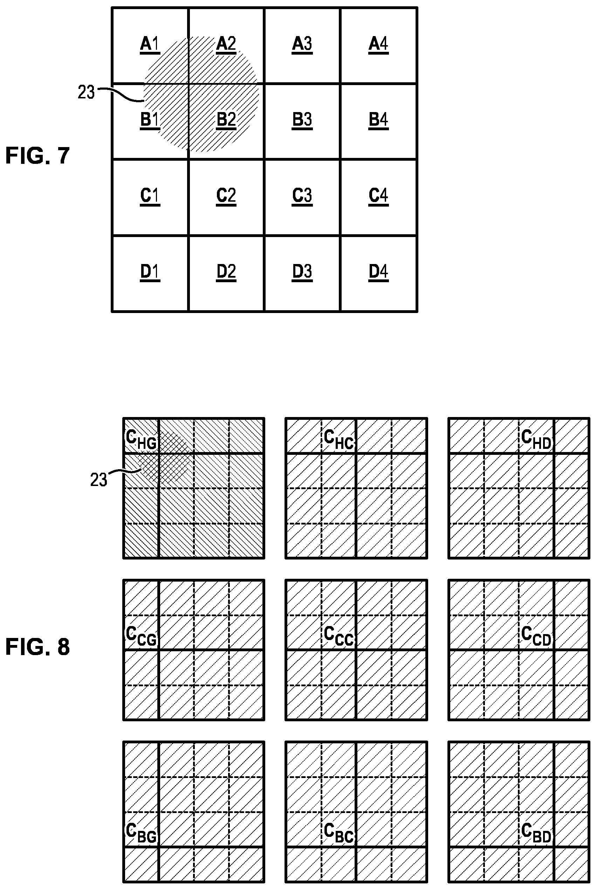

On a illustré sur les **figures 7** et **8** le choix d'une configuration de quatre quadrants lorsque la tache 23 occupe quatre quadrants uniquement sur les 4x4 quadrants du détecteur.

Sur la **figure 7** la tache 23 occupe quatre quadrants : A₁, A₂, B₁, B₂. Cette configuration offre plusieurs possibilités pour choisir un sous ensemble de 2x2 quadrants. La **figure 8** illustre ces possibilités C_{HG}, C_{HC}, C_{HD}, C_{CG}, C_{CC}, C_{CD}, C_{BG}, C_{BC}, C_{BD}. Pour le calcul de l'écartométrie on doit choisir une de ces configurations parmi celles qui détectent des signaux. Ces dernières sont les configurations C_{HG}, C_{HC}, C_{CG} et C_{CC} puisqu'elles ont au moins un quadrant qui détecte le signal. Or, on constate que seule la configuration C_{HG} détecte le signal sur ses quatre quadrants.

Par conséquent, le procédé comprend une sous étape de sélection (étape E21) d'une configuration de 2x2 quadrants pour le calcul des pesées, la configuration sélectionnée étant celle pour laquelle le niveau de signal détecté est le plus important. En d'autres termes, c'est celle qui donnera un rapport signal à bruit le plus grand qui sera conservée pour la suite du procédé.

En revenant à l'exemple de la **figure 7****,** l'écartométrie est ainsi calculée sur les signaux issus des quadrants A₁, A₂, B₁ et B₂. On comprend que les pesées P_{Y} et P_{z} ont des expressions identiques à celle données ci-avant, mais appliquées à la configuration de 2x2 quadrants sélectionnée. C'est-à-dire que dans ce mode de réalisation, on se ramène à la situation quatre quadrants illustrée ci-avant en lien avec la figure 3a.

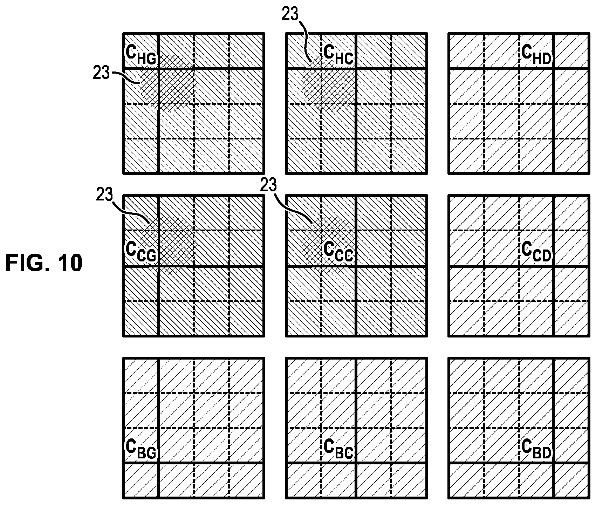

Selon un autre mode de réalisation, on prend en considération une situation dans laquelle la tache 23 occupe plus de quatre quadrants sur le détecteur NXM quadrants. Dans ce cas, pour améliorer la détection, il convient de considérer plus de 2x2 quadrants. C'est que qu'illustrent les **figures 9** et **10****.**

Sur la figure 9, la tache 23 atteint huit quadrants contigus qui s'inscrivent dans l'exemple dans une matrice 3x3 quadrants couvrant : A₁, A₂, A₃, B₁, B₂, B₃, C₁, C₂, C₃. Cette sous matrice est délimitée par les traits pointillés sur la figure 9. C'est la plus petite matrice qui inclue tous les quadrants atteints par la tache 23. Ainsi, lorsque la tache 23 couvre plus de quatre quadrants, les pesées sont établies selon un principe similaire aux cas des 4-quadrants mais qui compare plus de pesées par exemple :
comparaison de : A₁-B₁ ; A₂-B₂ ; A₃-B₃ ; (A₁+A₂+A₃) - (B₁+B₂+B₃) ;
comparaison de : B₁-C₁ ; B₂-C₂ ; B₃-C₃ ; (B₁+B₂+B₃) - (C₁+C₂+C₃) ;
comparaison de : A₁-A₂ ; B₁-B₂ ; C₁-C₂ ; (A₁+B₁+C₁) - (A₂+B₂+C₂) ;
comparaison de : A₂-A₃ ; B₂-B₃ ; C₂-C₃ ; (A₂+B₂+C₂) - (A₃+B₃+C₃).

De manière plus générale, les quadrants détectant un signal définissent une matrice NixMi de quadrants incluse dans la matrice NxM de quadrants du photodétecteur, Ni inférieur ou égal à N, Mi inférieur ou égal à M, et les pesées en site et gisement exploitent les signaux détectés dans cette matrice de NixMi quadrants détectant des signaux, les pesées en site et en gisement étant respectivement obtenues en comparant les signaux détectés sur des quadrants adjacents pris selon les lignes de cette matrice NixMi d'une part et pris selon les colonnes de cette matrice NixMi d'autre part. La matrice NixMi est de préférence la matrice de plus petite dimension contenant les quadrants atteints par la tache 23, c'est-à-dire détectant un signal.

Ainsi, la matrice NixMi de quadrants détectant un signal est balayée pour comparer les signaux selon les lignes et les colonnes.

Dans ce cas là la sous-étape E21 décrit ci-avant n'est pas mise en œuvre et l'étape de calcul des pesées E22 prend en compte plus de 2x2 quadrants.

En parallèle au calcul des pesées, un rapport signal à bruit total RSBₜₒₜ est calculé à partir des signaux détectés (étape E23). Un tel rapport signal à bruit permet d'adapter le critère utilisé pour vérifier la cohérence des critères de répartition avec les dispersions sur les niveaux des signaux dans les quadrants compte tenu de ce rapport signal à bruit. On s'adapte ici à la « qualité de la mesure ».

Ensuite, à partir de tables d'écartométrie Tab1 stockées dans le dispositif de localisation 1 une interpolation est mise en œuvre pour associer à chaque mesure de pesée, les valeurs d'écartométries G(t) et S(t) en gisement et en site respectivement (étape E24). Dans une mise en œuvre de l'invention, on applique une interpolation bilinéaire, qui a l'avantage d'être simple à mettre en œuvre.

On comprend que les tables d'écartométries dépendent directement de la géométrie du photodétecteur.

Les tables d'écartométries sont réalisées en usine pendant la calibration du photodétecteur sur une discrétisation de son domaine angulaire de fonctionnement. Pour chaque point du domaine, les signaux sortis des quadrants sont enregistrés. L'environnement « laboratoire » de cette caractérisation en usine garantit l'absence de perturbation des signaux laser et permet donc de constituer un modèle du fonctionnement nominal de référence.

Cette caractérisation en usine permet de construire une cartographie théorique, constituée des valeurs de référence attendues pour calculer une métrique en tout point du champ. Cette métrique sert à vérifier la cohérence des mesures. Cette cartographie dédiée à la « validité » s'ajoute à la caractérisation usuelle nécessaire pour les besoins de la fonctionnalité « écartométrie », qui permet l'établissement des correspondances entre pesées et écartométries. La cartographie de « validité » peut donc exploiter les mêmes données source et être constituée à partir du même protocole d'essai en usine.

Pour réaliser ces cartographies, on procède généralement comme suit :
- un flux laser collimaté généré par un banc est dirigé vers le photodétecteur selon des sites et gisements maitrisés ;
- pour chaque orientation du flux laser incident, les signaux sur chacun des quadrants du photodétecteur sont mesurés ;
- la table de correspondance théorique entre pesées et écartométries est construite.

A l'issue de cette étape E2, les écartométries en gisement G(t) et en site S(t) sont obtenues. Ces écartométries servent à localiser la cible T par rapport à l'axe de visée du dispositif si elles sont validées dans les étapes ultérieures. Cette écartométrie sert aussi à poursuivre une cible une fois localisée.

### Détermination des indicateurs de la répartition des signaux détectés (étape E3)

A partir de l'acquisition des signaux électroniques sur chacune des voies (quadrant) du photodétecteur, on détermine ici des indicateurs de la répartition des signaux détectés (étape E31).

Les indicateurs de la répartition mesurées comprennent outre les pesées utilisées pour l'écartométrie, des demi-pesées. Les demi-pesées sont aussi des pesées mais en prenant seulement des signaux deux à deux.

Dans le cas de quatre quadrants, P_{Y} et P_{Z} sont les pesées qui comparent respectivement les signaux du haut et du bas, et dans le cas de quatre quadrants P_{Y1}, P_{Y2}, P_{Z1}, P_{Z2} sont à proprement parler des demi-pesées puisque ces pesées comparent les signaux deux à deux, pour P_{Y1}, les deux signaux du haut, pour P_{Y2} les deux signaux du bas, pour P_{Z1} les deux signaux de gauche, pour P_{Z2} les deux signaux de droite et sont données par les expressions suivantes :
P_{Y1}=(S_{B}-S_{A})/(S_{A}+S_{B}), pesée comparant les deux signaux du haut ;
P_{Y2}=(S_{D}-S_{C})/(S_{C}+S_{D}), pesée comparant les deux signaux du bas ;
P_{Y}=(S_{B}+S_{D}-S_{A}-S_{C})/(S_{A}+S_{B}+S_{C}+S_{D}) pesée comparant les signaux de part et d'autre de l'axe vertical ;
P_{Z1}=(S_{A}-S_{C})/(SA+S_{C}), pesée comparant les deux signaux de gauche ;
P_{Z2}=(S_{B}-S_{D})/(S_{B}+S_{D}), pesée comparant les deux signaux de droite ;
P_{Z}=(S_{A}+S_{B}-S_{C}-S_{D})/(S_{A}+S_{B}+S_{C}+S_{D}) pesée comparant les signaux de part et d'autre de l'axe horizontal.

En ajoutant le calcul des demi-pesées à celui des pesées servant à l'estimation de l'écartométrie, on crée une redondance des informations mesurées.

En effet, à une écartométrie (site ou gisement) est associée une valeur unique de pesée (bijectivité), tandis que les demi-pesées peuvent prendre plusieurs couples de valeurs selon l'écartométrie sur l'autre axe (gisement ou site respectivement). Cependant, seul un couple de valeurs pour les demi-pesées vérifie la cohérence géométrique et radiométrie attendue en théorie pour la répartition de l'énergie lumineuse sur les différents quadrants associée à cette position en site et gisement de la cible.

Ces calculs sont transposables à n'importe quelles configurations à plusieurs quadrants.

Dans le cas où il y a plus de quatre quadrants l'idée est de calculer en plus des pesées nécessaires à l'écartométrie d'autres quantités associées à la répartition de la tache 23 sur le photodétecteur. Ainsi, l'homme du métier comprend qu'une multitude d'indicateur peut être calculée.

A partir de ces pesées, on détermine ensuite (étape E32) une métrique Ω à partir des indicateurs mesurés. Cette métrique Ω a pour but de caractériser la répartition énergétique de la tache 23 laser sur les différents quadrants du photodétecteur. Dans un exemple, une métrique Ω facilement applicable est basée sur un écart maximal non-signé entre les pesées et les demi-pesées. Une telle métrique Ω est par exemple donnée par l'expression suivante dans le cas de quatre quadrants : Ω = max([abs(PY1-PY2) ; abs(PZ1-PZ2) ; abs(PY1-PY) ; abs(PZ1-PZ) ; abs(PY2-PY), abs(PZ2-PZ)]).

Bien sûr, dans le cas de configurations à plus de quatre quadrants, il s'agit toujours de calculer une métrique basée sur les pesées et demi-pesées.

D'autres métriques pourraient être utilisées, par exemple une métrique basée sur des calculs de distance par référence à une tache qui respecte la forme théorique.

### Détermination des indicateurs de la répartition théorique des signaux pour l'écartométrie acquise (étape E4)

A partir des écartométries mesurées à l'étape E2, par interpolation, par exemple interpolation bilinéaire, avec des cartographies théoriques de pesées et demi-pesées Tab2, on détermine des indicateurs théoriques pour cette écartométrie mesurée (étape E41).

Ici il s'agit d'obtenir des pesées et demi-pesées attendues pour l'écartométrie mesurée par symétrie à l'obtention des indicateurs théoriques de la répartition des signaux acquis.

Ces indicateurs sont notés ici P'_{Y}, P'_{Z}, P'_{Y1}, P'_{Y2}, P'_{Z1}, P'_{Z2}.

Les cartographies des indicateurs théoriques Tab2 (ici pesées et demi-pesées théoriques) sont obtenues en usine de manière similaire aux cartographies Tab1.

Ces indicateurs théoriques ont les mêmes expressions que les indicateurs mesurés à la différence qu'ils ont été calculées à partir des signaux électroniques S'_{A}, S'_{B}, S'_{C}, S'_{D} mesurés en usine sur les quadrants.

On peut alors caractériser la répartition énergétique de la tache laser sur les quadrants du photodétecteur correspondant à ces indicateurs théoriques (étape E42). On applique une métrique Ω' qui a la même définition que la métrique Ω appliquée à l'étape E32.

Si on reprend l'exemple précédent, la métrique Ω' est ainsi basée sur un écart maximal non-signé entre les pesées théoriques et les demi-pesées théoriques, et donnée par la fonction suivante : Ω" = max([abs(P'Y1 - P'Y2); abs(P'z1 - P'z2); abs(P'Y1 - P'Y); abs(P'z1 - Pz) ; abs(P'Y2 - P'Y), abs(P'z2 - P'z)]).

### Vérification de la cohérence des indicateurs de la répartition théorique et de la répartition mesurée (étape E5)

La vérification de la cohérence entre les indicateurs des répartitions théorique et mesurée est avantageusement mise en oeuvre par comparaison (étape E51) des métriques Ω et Ω'' et comprend le calcul d'un critère de comparaison entre ces métriques.

Un tel critère est donné par la formule suivante : Crit = abs(Ω - Ω'') à savoir une différence non signée des deux métriques.

Ce critère est alors comparé à un seuil (étape E52).

On distingue deux cas :
- premier cas : si Crit ≥ S alors l'écartométrie courante est invalide. Autrement dit, si la différence non-signée entre les deux métriques Ω' et Ω est supérieure au égale à la valeur de seuil, alors cette écartométrie est considérée « aberrante ou invalide » ;
- deuxième cas : si Crit <S alors l'écartométrie courante est valide. Autrement dit, si la différence non-signée entre les deux métriques Ω et Ω' est inférieure à la valeur de seuil, alors cette écartométrie courante est « validée ».

Selon un mode de réalisation le seuil S est fixé arbitrairement et résulte avantageusement d'un compromis entre
- un taux de fausses alarmes caractérisant la proportion d'écartométries valides qui sont invalidées ;
- un taux de détection caractérisant la proportion d'écartométries aberrantes et identifiées comme telles par le critère.

De manière complémentaire (étape E53), il peut être nécessaire selon le compromis recherché d'ajouter une ou des dépendances au seuil telles que
- une dépendance au rapport signal à bruit RSBtot des signaux mesurés, qui permet de stabiliser le taux de « fausses alarmes » sur le domaine de fonctionnement par une augmentation de la valeur de seuil à faible RSBtot et par une diminution de cette valeur à fort RSBtot,
- une dépendance à la position dans le domaine angulaire, qui permet d'ajuster la performance du calcul de cohérence dans le champ.

Dans le premier cas, le rapport signal à bruit RSBtot des signaux mesurés est utilisé pour définir le seuil applicable, par interpolation de données Tab3 établies pour quelques positions angulaires en site et gisement, et fonctions de quelques niveaux tabulés du RSBtot. Dès lors le seuil dépend de l'écartométrie mesurée.

Dans le deuxième cas, on réalise une interpolation dans une cartographie du seuil selon l'écartométrie mesurée (courante) en utilisant les données Tab3.

A l'issue de la comparaison avec le seuil, on obtient un statut de validité de l'écartométrie mesurée.

### Autres applications

On a décrit le procédé dans le cadre d'un photodétecteur présentant une matrice de plusieurs quadrants.

Toutefois, différentes variantes sont envisageables et elles résultent du même principe qui consiste à exploiter la connaissance a priori de la répartition énergétique de la tache sur un photodétecteur multi-quadrants.

La tache peut être de géométrie différente d'un disque uniforme. D'autres formes sont parfois privilégiées, pour simplifier ou compactifier l'élément optique en amont du photodétecteur et/ou en conséquence de l'intégration dans un dispositif associant plusieurs voies optroniques, par exemple dans le cas d'un équipement (à obturation centrale ; et/ou pour privilégier certaines spécifications de la réponse écartométrique, par exemple, une dépendance réduite à la taille du spot sur la cible et/ou à la distance entre la cible et le capteur SAL, qu'il soit de type LST ou E-SAL.

Ces autres géométries de taches sur le photodétecteur peuvent notamment être : une forme de type couronne, une forme de type « gaussienne », une forme de type « carrée », une forme parmi celles pré-citées et présentant une modulation spatiale résultant d'éléments optiques de réduction des effets de scintillation.

Le photodétecteur multi-quadrants peut être de type 4-quadrants comme plus particulièrement pris en exemple ci-avant, c'est la géométrie usuelle ; mais il peut présenter toute autre géométrie qui, associé à la taille et la forme théoriques de la tache laser, permet d'identifier une anomalie dans la répartition de l'énergie sur les quadrants. Notamment, comme présenté ci-avant, une première famille d'extensions couvre les photodétecteurs à N x M éléments, chaque élément étant carré ou rectangulaire. Une autre famille d'extensions regroupe les photodétecteurs avec des géométries présentant un nombre de secteurs angulaires supérieur à 4.

La mesure écartométrique laser utilisant un photodétecteur multi-éléments est appliquée dans de nombreux domaines.

Dans le contexte du guidage semi-actif d'armement ou du pointage laser de cible, une cible intercepte le faisceau et diffuse une partie de l'énergie vers le capteur SAL.

Dans d'autres contextes, les photodétecteur multi-éléments sont associés à des lasers dans des configurations directes. Dans ces configurations directes, le laser est dirigé vers le capteur équipé d'un photodétecteur multi-éléments et le capteur élabore une écartométrie pour aider au pointage et/ou au déplacement relatif d'un module porteur du laser et d'un module porteur du capteur. Ce type d'instrumentation à configuration directe est utilisé dans de multiples domaines, tel le domaine spatial, le domaine des machines industrielles, le domaine des travaux publics et le domaine du guidage autonome de véhicules, notamment dans des contextes coopératifs. Dans ces deux derniers domaines, on peut rencontrer les phénomènes perturbateurs auxquels l'invention apporte une réponse : les problèmes de non-homogénéité causés par la scintillation atmosphérique, et les problèmes de flux parasites.

## Revendications

1. Procédé de localisation d'une cible (T) au moyen d'un dispositif de détection comprenant un photodétecteur comprenant NxM quadrants positionné par rapport à un axe de visée du dispositif de détection, le photodétecteur étant configuré pour détecter des signaux optiques issus de la cible à détecter, le photodétecteur comprenant des quadrants répartis selon deux axes perpendiculaires dits axes site Z et gisement Y, ledit procédé étant mis en oeuvre dans une unité de traitement dudit dispositif et comprend les étapes suivantes, la cible diffusant un signal optique :
- acquisition (E1) des signaux détectés par chaque quadrant correspondant aux signaux (S_{A}, S_{B}, S_{C}, S_{D}) diffusés par la cible vers les quadrants ;
- traitement (E2) des signaux acquis pour déterminer une écartométrie en site (S(t)) et une écartométrie en gisement (G(t)) de la direction de la cible par rapport à l'axe de visée du dispositif ;
- traitement (E3) des signaux acquis pour en déduire des indicateurs de répartition des signaux détectés par les quadrants ;
- traitement (E4) des écartométries en site et gisement déterminées pour en déduire des indicateurs de la répartition théorique des signaux dans les quadrants pour ces écartométries ; les indicateurs de répartition (E3, E4) du signal dans les quadrants étant obtenus au moyen des valeurs de pesées théoriques et mesurées, lesdites pesées étant fonction des niveaux de signal détectés par les quadrants,
- vérification (E5) de la cohérence des indicateurs de la répartition théorique aux indicateurs de la répartition issue des signaux acquis de manière à déterminer si l'écartométrie mesurée est valide.

2. Procédé selon la revendication 1, dans lequel, les indicateurs de la répartition théorique des signaux (E4) dans les quadrants est obtenue par interpolation, de préférence bilinéaire, des écartométries avec une cartographie des indicateurs de la répartition théorique des signaux en fonction de plusieurs écartométries théoriques.

3. Procédé selon l'une des revendications 1 à 2, dans lequel les NxM quadrants du photodétecteur étant répartis selon deux axes perpendiculaires entre eux, dit axe site Z et axe gisement Y, les quadrants détectant un signal définissant une sous-matrice incluse dans la matrice NxM, de taille NixMi quadrants avec Ni inférieur ou égal à N, et Mi inférieur ou égal à M, et détectant des signaux, les indicateurs de répartition des signaux étant obtenus en comparant les signaux détectés sur des quadrants adjacents pris selon les lignes de la matrice NixMi d'une part et pris selon les colonnes de la matrice NixMi d'autre part.

4. Procédé selon l'une des revendications précédentes, dans lequel la vérification de la cohérence consiste à calculer un critère de comparaison entre une première métrique fonction des indicateurs de répartition théorique et une deuxième métrique fonction des indicateurs de répartition des signaux acquis, le critère étant comparé à un seuil pour valider les mesures d'écartométrie.

5. Procédé selon la revendication 4, dans lequel le critère de comparaison est défini par une différence non signée entre les première et deuxième métriques, l'écartométrie étant valide si ce critère est inférieur à un seuil et invalide si ce critère est supérieur ou égal audit seuil.

6. Procédé selon l'une des revendications 4 à 5, dans lequel le seuil est ajusté en fonction du rapport signal à bruit mesuré sur chaque quadrant et/ou de l'écartométrie déterminée.

7. Procédé selon l'une des revendications précédentes, dans lequel le photodétecteur comprend quatre quadrants A, B, C, D, les quadrants A et B étant au-dessus de l'axe site Z, les quadrants C et D étant au-dessous l'axe Z, le quadrant C étant au-dessous du quadrant A, le quadrant D étant au-dessous du quadrant B, les critères de répartition des signaux sur les quadrants étant définis de la manière suivante :
- Y₁=(B-A)/( A+B), pesée comparant les deux signaux du haut ;
- Y₂=(D-C)/(C+D), pesée comparant les deux signaux du bas
- Y=(B+D-A-C)/(A+B+C+D) pesée comparant les signaux de part et d'autre de l'axe vertical ;
- Z₁=(A-C)/(A+C), pesée comparant les deux signaux de de gauche
- Z₂=(B-D)/(B+D), pesée comparant les deux signaux de droite
- Z=(A+B-C-D)/(A+B+C+D) pesée comparant les signaux de part et d'autre de l'axe horizontal.

8. Procédé selon la revendication 7, dans lequel les métriques fonction des critères de répartition théoriques ou mesurées est définie par
max([abs(Y₁-Y₂) ; abs(Z₁-Z₂) ; abs(Y₁-Y) ; abs(Z₁-Z) ; abs(Y₂-Y), abs(Z₂-Z)]) avec max la valeur maximale et abs la valeur absolue.

9. Dispositif de détection d'une cible comprenant un photodétecteur à plusieurs quadrants et une unité de traitement configurée pour mettre en œuvre un procédé selon l'une des revendications précédentes.

10. Système de guidage d'un missile vers une cible en mouvement, ledit système comportant un dispositif de détection selon la revendication précédente.

11. Produit programme d'ordinateur comprenant des instructions de code pour la mise en œuvre d'un procédé selon l'une des revendications 1 à 8, lorsque celui-ci est exécuté par une unité de traitement d'un dispositif selon la revendication 9.

## Patentansprüche

1. Verfahren zur Ortung eines Ziels (T) mittels einer Detektionsvorrichtung, die einen Fotodetektor mit NxM Quadranten umfasst, der in Bezug auf eine Visierachse der Detektionsvorrichtung positioniert ist, wobei der Fotodetektor ausgelegt ist, um optische Signale zu erkennen, die von dem zu detektierenden Ziel ausgehen, wobei der Fotodetektor Quadranten umfasst, die gemäß zweier senkrechter Achsen, bezeichnet als Höhenwinkelachse Z und Seitenwinkelachse Y, verteilt sind, wobei das Verfahren in einer Verarbeitungseinheit der Vorrichtung durchgeführt wird und die folgenden Schritte umfasst, wobei das Ziel ein optisches Signal verbreitet:
- Erfassen (E1) der von jedem Quadranten erkannten Signale, die den vom Zielobjekt zu den Quadranten verbreiteten Signalen (S_{A}, S_{B}, S_{C}, S_{D}) entsprechen;
- Verarbeiten (E2) der erfassten Signale, um eine Höhenwinkel-Abweichungsmessung (S(t)) und eine Seitenwinkel-Abweichungsmessung (G(t)) der Richtung des Ziels in Bezug auf die Visierachse der Vorrichtung zu bestimmen;
- Verarbeiten (E3) der erfassten Signale, um daraus Indikatoren für die Verteilung der von den Quadranten erkannten Signale abzuleiten;
- Verarbeiten (E4) der bestimmten Höhenwinkel- und Seitenwinkel-Abweichungsmessungen, um daraus Indikatoren für die theoretische Verteilung der Signale in den Quadranten für diese Abweichungsmessungen abzuleiten; wobei die Verteilungsindikatoren (E3, E4) des Signals in den Quadranten anhand der theoretischen und gemessenen Wägewerte erhalten werden, wobei die Wägungen von den von den Quadranten erkannten Signalpegeln abhängen,
- Überprüfen (E5) der Übereinstimmung der Indikatoren der theoretischen Verteilung mit den Indikatoren der Verteilung, die von den erfassten Signalen ausgeht, um festzustellen, ob die gemessene Abweichungsmessung gültig ist.

2. Verfahren nach Anspruch 1, wobei die Indikatoren der theoretischen Verteilung der Signale (E4) in den Quadranten durch vorzugsweise bilineare Interpolation der Abweichungsmessungen mit einer Kartierung der Indikatoren der theoretischen Verteilung der Signale in Abhängigkeit von mehreren theoretischen Abweichungsmessungen erhalten werden.

3. Verfahren nach einem der Ansprüche 1 bis 2, wobei die NxM Quadranten des Fotodetektors gemäß zweier zueinander senkrechter Achsen, bezeichnet als Höhenwinkelachse Z und Seitenwinkelachse Y, verteilt sind, wobei die Quadranten ein Signal erkennen, das eine in der Matrix NxM enthaltene Untermatrix der Größe NixMi Quadranten mit Ni kleiner oder gleich N und Mi kleiner oder gleich M definiert und Signale erkennt, wobei die Signalverteilungsindikatoren durch Vergleichen der Signale erhalten werden, die einerseits auf benachbarten Quadranten gemäß der Zeilen der Matrix NixMi und andererseits gemäß der Spalten der Matrix NixMi erkannt werden.

4. Verfahren nach einem der vorstehenden Ansprüche, wobei die Überprüfung der Kohärenz darin besteht, ein Vergleichskriterium zwischen einer ersten Metrik, die von den theoretischen Verteilungsindikatoren abhängt, und einer zweiten Metrik, die von den Indikatoren der Verteilung der erfassten Signale abhängt, zu berechnen, wobei das Kriterium mit einem Schwellenwert verglichen wird, um die gemessenen Abweichungsmessungen zu validieren.

5. Verfahren nach Anspruch 4, wobei das Vergleichskriterium durch eine vorzeichenlose Differenz zwischen der ersten und der zweiten Metrik definiert ist, wobei die Abweichungsmessung gültig ist, wenn dieses Kriterium unter einem Schwellenwert liegt, und ungültig, wenn dieses Kriterium größer oder gleich dem Schwellenwert ist.

6. Verfahren nach einem der Ansprüche 4 bis 5, wobei der Schwellenwert in Abhängigkeit vom gemessenen Signal-Rausch-Verhältnis in jedem Quadranten und/oder der ermittelten Abweichungsmessung angepasst wird.

7. Verfahren nach einem der vorstehenden Ansprüche, wobei der Fotodetektor vier Quadranten A, B, C, D umfasst, wobei die Quadranten A und B über der Höhenwinkelachse Z liegen, die Quadranten C und D unter der Achse Z liegen, der Quadrant C unter dem Quadranten A liegt, der Quadrant D unter dem Quadranten B liegt, wobei die Kriterien für die Verteilung der Signale auf die Quadranten wie folgt definiert sind:
- Y₁=(B-A)/(A+B), wobei die Wägung die beiden oberen Signale vergleicht;
- Y₂=(D-C)/(C+D), wobei die Wägung die beiden unteren Signale vergleicht;
- Y=(B+D-A-C)/(A+B+C+D), wobei die Wägung die Signale auf beiden Seiten der vertikalen Achse vergleicht;
- Z₁=(A-C)/(A+C), wobei die Wägung die beiden Signale links vergleicht;
- Z₂=(B-D)/(B+D), wobei die Wägung die beiden Signale rechts vergleicht
- Z=(A+B-C-D)/(A+B+C+D), wobei die Wägung die Signale auf beiden Seiten der horizontalen Achse vergleicht.

8. Verfahren nach Anspruch 7, wobei die Definition der Metriken in Abhängigkeit von den theoretischen oder gemessenen Verteilungskriterien erfolgt durch
max([abs(Y₁-Y₂); abs(Z₁-Z₂) abs(Y₁-Y); abs(Z₁-Z); abs (Y₂-Y), abs(Z₂-Z)]),
wobei max den Maximalwert und abs den Absolutwert bezeichnet.

9. Detektionsvorrichtung eines Ziels, mit einem Mehrquadranten-Fotodetektor und einer Verarbeitungseinheit, die zur Durchführung eines Verfahrens nach einem der vorstehenden Ansprüche ausgelegt ist.

10. System zum Lenken eines Flugkörpers auf ein sich bewegendes Ziel, wobei das System eine Detektionsvorrichtung nach vorstehendem Anspruch aufweist.

11. Rechnerprogrammprodukt, das Codebefehle zur Durchführung eines Verfahrens nach einem der Ansprüche 1 bis 8 umfasst, wenn es von einer Verarbeitungseinheit einer Vorrichtung nach Anspruch 9 ausgeführt wird.

## Claims

1. A method for locating a target (T) by means of a detecting device comprising a photodetector comprising NxM quadrants positioned with respect to a sighting axis of the detecting device, the photodetector being configured to detect optical signals from the target to be detected, the photodetector comprising quadrants distributed along two perpendicular axes called elevation Z and azimuth Y axes, said method being implemented in a processing unit of said device and comprising the following steps, the target scattering an optical signal:
- acquiring (E1) the signals detected by each quadrant, which correspond to the signals (S_{A}, S_{B}, S_{C}, S_{D}) scattered by the target toward the quadrants;
- processing (E2) the acquired signals to determine an elevation angle error and an azimuth angle error of the direction of the target with respect to the sighting axis of the device;
- processing (E3) the acquired signals with a view to deducing therefrom indicators of the distribution of the signals detected by the quadrants;
- processing (E4) the determined elevation angle error and azimuth angle error with a view to deducing therefrom indicators of the theoretical distribution of the signals in the quadrants for these angle errors; distribution indicators (E3, E4) of the signal in the quadrants being obtained by means of theoretical and measured weighting values, said weightings being based on the levels of the signals detected by the quadrants,
- verifying (E5) the coherence of the theoretical distribution indicators with the distribution indicators obtained using the acquired signals so as to determine whether the measured angle error is valid.

2. The method according to claim 1, wherein, the theoretical distribution indicators of the signals (E4) in the quadrants is obtained by interpolation, preferably bilinear interpolation, of the angle errors with a mapping of the theoretical distribution indicators of the signals as a function of a plurality of theoretical angle errors.

3. The method according to one of claims 1 to 2, wherein the NxM quadrants of the photodetector are distributed along two mutually perpendicular axes, referred to as the elevation axis Z and azimuth axis Y, the quadrants detecting a signal defining a sub-matrix included in the NxM matrix, of size NixMi quadrants, with Ni less than or equal to N, and Mi less than or equal to M, and detecting signals, the distribution indicators of the signals being obtained by comparing the signals detected on adjacent quadrants taken along the rows of the NixMi matrix on the one hand, and taken along the columns of the NixMi matrix, on the other hand.

4. The method according to one of the preceding claims, wherein verifying the coherence consists of calculating a comparison criterion between a first metric based on the theoretical distribution indicators and a second metric based on the distribution indicators of the acquired signals, the criterion being compared with a threshold in order to validate the angle error measurements.

5. The method according to claim 4, wherein the comparison criterion is defined by an absolute difference between the first and second metrics, the angle error being valid if this criterion is less than a threshold and invalid if this criterion is greater than or equal to said threshold.

6. The method according to one of claims 4 to 5, wherein the threshold is adjusted as a function of the signal-to-noise ratio measured on each quadrant and/or of the determined angle error.

7. The method according to one of the preceding claims, wherein the photodetector comprises four quadrants A, B, C, D, quadrants A and B being above the elevation axis Z, quadrants C and D being below the axis Z, quadrant C being below quadrant A, quadrant D being below quadrant B, the distribution criteria of the signals over the quadrants being defined in the following manner:
- Y₁=(B-A)/( A+B), weighting comparing the top two signals;
- Y₂=(D-C)/(C+D), weighting comparing the bottom two signals
- Y=(B+D-A-C)/(A+B+C+D) weighting comparing the signals on either side of the vertical axis;
- Z₁=(A-C)/(A+C), weighting comparing the two signals on the left
- Z₂=(B-D)/(B+D), weighting comparing the two signals on the right
- Z=(A+B-C-D)/(A+B+C+D) weighting comparing the signals on either side of the horizontal axis.

8. The method according to claim 7, wherein the metrics based on theoretical or measured distribution criteria are defined by
max([abs(Y₁-Y₂); abs(Z₁-Z₂); abs(Y₁-Y); abs(Z₁-Z); abs(Y₂-Y), abs(Z₂-Z)]) with max the maximum value and abs the absolute value.

9. A device for detecting a target comprising a photodetector with a plurality of quadrants and a processing unit configured to implement a method according to one of the preceding claims.

10. A system for guiding a missile towards a moving target, said system comprising a detection device according to the preceding claim.

11. A computer program product comprising code instructions for implementing a method according to one of claims 1 to 8, when it is executed by a processing unit of a device according to claim 9.
